# EUROPÄISCHE PATENTSCHRIFT

(11) **EP 3 179 364 B1**
(45) Veröffentlichungstag und Bekanntmachung des Hinweises auf die Patenterteilung: **06.02.2019**
(21) Anmeldenummer: 16020482.2
(22) Anmeldetag: 06.12.2016
(51) Int. Cl.: G06F 9/44, G05B 19/042

(54) **VERFAHREN UND VORRICHTUNG ZUR ENTWICKLUNG VON SOFTWARE EINES STEUERUNGS-/REGELUNGSSYSTEMS EINES FAHRZEUGES**
METHOD AND DEVICE FOR DEVELOPING SOFTWARE FOR A CONTROL/MANAGEMENT SYSTEM OF A VEHICLE
PROCÉDÉ ET DISPOSITIF POUR DEVELOPER UN LOGICIEL D'UN SYSTÈME DE COMMANDE/DE RÉGLAGE D'UN VÉHICULE

(30) Priorität: 10.12.2015 DE 102015121486
(43) Veröffentlichungstag der Anmeldung: 14.06.2017
(73) Patentinhaber: IAV GmbH, 10587 Berlin (DE)
(72) Erfinder: Delso, Pedro Miguel Isaac, D-70499 Stuttgart (DE); Lieb, Sebastian, D-71404 Korb (DE); Stobbe, Veit, D-38106 Braunschweig (DE)
(74) Vertreter: Fukala, Georg

(56) Entgegenhaltungen:
- EP-A1- 1 860 548
- DE-A1-102008 021 030
- MALTE LEGENHAUSEN ET AL: "RepoGuard: A Framework for Integration of Development Tools with Source Code Repositories", GLOBAL SOFTWARE ENGINEERING, 2009. ICGSE 2009. FOURTH IEEE INTERNATIONAL CONFERENCE ON, IEEE, PISCATAWAY, NJ, USA, 13. Juli 2009 (2009-07-13), Seiten 328-331, XP031505063, ISBN: 978-0-7695-3710-8

## Beschreibung

Die vorliegende Erfindung betrifft ein Verfahren und eine Vorrichtung zum Betrieb eines Steuerungs-/Regelungssystems eines Fahrzeuges mit den Merkmalen gemäß den Patentansprüchen.

Für den Betrieb eines Fahrzeuges ist es bekannt, mehrere Steuergeräte zur Steuerung/Regelung einzelner Fahrzeugkomponenten vorzusehen, wobei ein Steuerungs-/Regelungssystem gebildet wird. Beispielsweise weist ein Fahrzeug ein Steuergerät für die Antriebsmaschine und ein Steuergerät für das Getriebe des Fahrzeuges auf. Jedes Steuergerät weist einerseits eine Hardware und andererseits eine Software bzw. ein Programm auf. Die Steuergeräte-Software lässt sich in Programmcode und Daten trennen. Der Programmcode umfasst die einzelnen auszuführenden Funktionen und die Daten umfassen die Parameter dieser Funktionen.

Für den Betrieb eines Fahrzeuges ist es weiterhin bekannt, mehrere Steuergeräte mittels eines Bussystems miteinander zu verbinden. Ein solches System ist gemäß der DE 101 62 853 C1 Stand der Technik. Dieses System besteht aus mindestens zwei separaten Steuergeräten, die über ein Bussystem miteinander verbunden sind, wobei die Steuergeräte jeweils zur Steuerung einzelner Fahrzeugkomponenten, beispielsweise der Antriebsmaschine und dem Getriebe, vorgesehen sind. Für eine effektive Nutzung der bestehenden Ressourcen an Speicherplatz und Rechenzeit sowie zur Sicherung einer echtzeitfähigen Abarbeitung der Routinen wird dabei der Programmcode mindestens einer Funktion eines Programms, das auf einem ersten Steuergerät abgelegt ist und von dem Prozessor des ersten Steuergerätes ausgeführt wird, in dem weiteren, an das Bussystem angekoppelten Steuergerät abgelegt, so dass der Programmcode und die Funktion im ersten Steuergerät nicht mehr vorhanden sind, wobei die so ausgelagerte Funktion in den Programmablauf des auf dem weiteren Steuergerät ablaufenden Programms eingebunden ist und auf dem Prozessor des weiteren Steuergerätes abgearbeitet wird, wobei die Ein- und Ausgangsgrößen der betreffenden Funktion zwischen dem weiteren Steuergerät und dem ersten Steuergerät über das Bussystem übermittelt werden.

Wie weiterhin bekannt, erfolgt im Rahmen der Entwicklungsphase eines Fahrzeuges und somit der Entwicklung eines Steuerungs-/Regelungssystems des Fahrzeuges eine Parametrierung der einzelnen Funktionen bzw. eine Bedatung der Software der vorhandenen Steuergeräte, so dass mittels jedes Steuergerätes bei dem Betrieb eines Fahrzeuges in der späteren Nutzungsphase die jeweilige Fahrzeugkomponente möglichst optimal gesteuert/geregelt wird und alle vorhandenen Steuergeräte möglichst optimal zusammenwirken. Diese Abstimmung wird auch als Applikation oder Kalibrierung bezeichnet. D. h. während der Entwicklungsphase eines Fahrzeuges erfolgt ein Anpassungsprozess mit dem Ziel, dass das jeweilige Steuergerät und die betreffende Fahrzeugkomponente möglichst optimal zusammenwirken.

Bedingt durch die Vielzahl möglicher Ausstattungs- und sonstiger Varianten eines Fahrzeugtyps ergibt sich schon allein bei Nutzung nur eines einzelnen Steuergerätes, das hier zunächst beispielhaft diskutiert werden soll, eine Vielzahl inhaltlich unterschiedlicher Datensätze, also Datensatzvarianten passend zu dem jeweiligen Programmcode bzw. zur jeweiligen Funktion. Beispielsweise hat die Antriebsmaschine einer Fahrzeugvariante gegenüber einer anderen Fahrzeugvariante eine höhere Leistung bzw. ein höheres Drehmoment, aber das Arbeitsprinzip der Antriebsmaschine bleibt unverändert (Dieselmotor bleibt Dieselmotor, aber mit größerem Hubraum; PSM bleibt PSM, aber mit größerem Rotordurchmesser), dann bleibt die Hardware des Steuergerätes für die Antriebsmaschine gleich und die Software des Steuergerätes umfasst einen übereinstimmenden Programmcode, also die Funktionen bleiben unverändert, jedoch ergeben sich bei der Applikation für jede Fahrzeugvariante andere Funktionsparameter bzw. Datensätze.

Einerseits werden in der Entwicklungsphase eines Steuerungs-/Regelungssystems eines Fahrzeuges die Softwarestände bzw. die Datensätze dieses beispielhaft einzigen Steuergerätes für jede Variante eines Fahrzeugtyps hinsichtlich ihres Reifegrades bewertet. So kann beispielsweise festgestellt werden, dass die aktuelle Software einen noch nicht befriedigenden Reifegrad aufweist. Der Reifegrad kann deshalb unbefriedigend sein, weil die Funktionsparameter noch nicht derart beschaffen bzw. zutreffend sind, so dass die Antriebsmaschine noch nicht zufriedenstellend gesteuert/geregelt wird. Denkbar ist außerdem, dass der Reifegrad deshalb unbefriedigend ist, da noch nicht alle Funktionen derart mittels der Software abgebildet werden, wie es notwendig wäre, um die Antriebsmaschine wie gewünscht zu steuern/zu regeln. Mit anderen Worten kann es dann sein, dass im Rahmen der weiteren Entwicklung noch Funktionsanpassungen bzw. Funktionserweiterungen erfolgen müssen. Die Bewertung des Reifegrades kann jedenfalls einfach auf Grundlage einer Gegenüberstellung des aktuellen Softwarestandes mit einem vorherigen Softwarestand bzw. mehreren vorherigen Softwareständen erfolgen. Sind beispielsweise bei dem aktuellen Softwarestand gegenüber dem vorherigen Softwarestand mehrere Funktionen verfeinert beziehungsweise sind einfach mehrere Funktionsparameter angepasst, hat der aktuelle Softwarestand einen neuen, höheren Reifegrad als der vorherige Softwarestand. Anders gesagt, ist eine historische Betrachtung des Softwarestandes möglich und wird auch durchgeführt. Andererseits werden in der Entwicklungsphase eines Steuerungs-/Regelungssystems eines Fahrzeuges die Datensätze bzw. Softwarestände dieses beispielhaft einzigen Steuergerätes derart verwaltet, dass jede an der Entwicklung des Fahrzeuges beteiligte Person Zugriff auf die Software bzw. die Datensätze mit den verschiedenen Reifegraden hat, beispielsweise um den Datensatz mit dem höchsten Reifegrad bei weiteren Versuchen so anzupassen, dass der Reifegrad weiter erhöht wird.

Zusammengefasst erfolgt gemäß dem Stand der Technik während der Entwicklung eines Steuerungs-/Regelungssystems eines Fahrzeuges ein Management der Software der einzelnen verwendeten Steuergeräte des Fahrzeuges auf der Ebene des jeweiligen Steuergerätes. D. h. die Bewertung und Verbesserung des Reifegrades der Software bzw. der Funktionen und Funktionsparameter eines Steuergerätes werden in Bezug auf dieses Steuergerät vorgenommen.

Sind nun für den Betrieb eines Fahrzeuges mehrere Steuergeräte mittels eines Bussystems miteinander verbunden, dann werden der oben beschriebene Prozess der Bewertung und Verbesserung des Reifegrades der Software bzw. der Funktionen und Funktionsparameter der Steuergeräte bzw. des Steuergeräteverbundes sowie die Verwaltung der Softwarestände erheblich erschwert. Das liegt vor allem daran, dass die oben beschriebene Auslagerung von Funktionen und Funktionsparametern eines Steuergerätes in ein anderes Steuergerät innerhalb des Verbundes während der Entwicklung eines Steuerungs-/Regelungssystems eines Fahrzeuges durchgeführt wird. Insbesondere kann sich erst mit Erreichen eines bestimmten Reifegrades der Software des Steuergerätes der Antriebsmaschine herausstellen, dass die Hardware dieses Steuergerätes den Anforderungen nicht mehr gewachsen ist und dass eine Anzahl von Funktionen und zugehörigen Funktionsparametern auf das Steuergerät des Getriebes ausgelagert werden muss. Denkbar ist es weiterhin, dass im weiteren Verlauf der Entwicklung auch die Ressourcen dieses Steuergerätes aufgebraucht sind und eine erneute Auslagerung von Bestandteilen der Software dieses Steuergerätes auf ein noch weiteres Steuergerät in diesem Verbund erfolgt, beispielsweise auf ein Steuergerät zur Dosierung eines Reduktionsmittels zu einer Abgasnachbehandlungsanlage.

Einerseits erschwert das die Bewertung und Verfolgung des Reifegrades der Software.

Beispielsweise erfolgt die Ermittlung der Funktionsparameter der Funktionen zur Steuerung/Regelung des Getriebes gegenüber der Anpassung der Funktionsparameter der Funktionen zur Steuerung/Regelung der Antriebsmaschine zeitlich verzögert. Dann existiert zu einem bestimmten Zeitpunkt eine Software zur Steuerung der Antriebsmaschine mit einem vergleichsweise hohen Reifegrad und eine Software zur Steuerung des Getriebes mit einem vergleichsweise geringen Reifegrad. Werden zu dem bestimmten Zeitpunkt eine Funktion und die dazugehörigen Funktionsparameter von dem Steuergerät der Antriebsmaschine auf das Steuergerät des Getriebes ausgelagert, hat das einen Einfluss sowohl auf die Software mit dem relativ hohen Reifegrad als auch auf die Software mit dem relativ geringen Reifegrad. Da die Software mit dem relativ hohen Reifegrad und die Software mit dem relativ niedrigen Reifegrad infolge der Auslagerung von Funktionen von dem genannten Zeitpunkt an voneinander abhängig sind, hat sich zwar weder der Reifegrad der einen noch der anderen Software unmittelbar verändert, dennoch hat sich für die jeweils beteiligte Software eine neue Qualität ergeben. Insofern ist die Bewertung und Verfolgung des Reifegrades der Software gemäß dem Stand der Technik, quasi auf der Ebene des jeweiligen Steuergerätes, bisher unvollkommen.

Andererseits kann die oben beschriebene Auslagerung von Funktionen und Funktionsparametern in der Entwicklungsphase eines Steuerungs-/Regelungssystems auch weitere negative Auswirkungen haben. Beispielsweise plant eine an der Entwicklung des Fahrzeuges beteiligte Person einen Abgastest durchzuführen. Dazu werden die Software des Steuergerätes der Antriebsmaschine mit einem bestimmten Reifegrad sowie die Software des Steuergerätes des Getriebes mit einem bestimmten Reifegrad ausgewählt. Jedoch wird infolge der oben beschriebenen Schwierigkeiten bei der Bewertung und Verfolgung des Reifegrades der Software der einzelnen Steuergeräte in einem Verbund nicht berücksichtigt, dass die Software des Steuergerätes der Antriebsmaschine mittlerweile abhängig ist von der Software des Steuergerätes des Getriebes, da Funktionen, wie gemäß der DE 101 62 853 C1 bekannt, ausgelagert wurden. Das kann z. B. dadurch begründet sein, dass diese Abhängigkeit nicht ausreichend bzw. wirksam kenntlich gemacht wurde. Jedenfalls kann dieser Abgastest nicht sinnvoll durchgeführt werden, sofern das Fahrzeug überhaupt gestartet werden kann. Eine Fehlersuche und somit Zeitverlust oder sogar ein versteckter Fehler, der sich durch die weitere Entwicklung zieht, kann die Folge sein.

Vergleichbare Probleme hinsichtlich der Bereitstellung korrekter Daten können auch dann auftreten, wenn z. B. ein weiteres Steuergerät zu dem Steuergeräteverbund bzw. Steuerungs-/Regelungssystem hinzugefügt wird, also mittels der neuen Vielzahl von Steuergeräten noch immer die Steuerung/Regelung der Antriebsmaschine und des Getriebes erfolgt, allerdings in Verbindung mit einem neu hinzugekommenen Steuergerät zur Dosierung eines Reduktionsmittels zu einer Abgasnachbehandlungsanlage, auf das Funktionen der Steuerung des Getriebes und/oder der Antriebsmaschine ausgelagert wurden. Anders gesagt, ist es gemäß dem Stand der Technik nur schwer möglich, gewachsene und ursprüngliche vorhandene Verbünde (Topologien) von Steuergeräten (oder andere, aber funktional gleichwirkende Verbünde von Steuergeräten) eines Fahrzeuges hinsichtlich des Reifegrades der jeweiligen Software bei der Entwicklung eines Steuerungs-/Regelungssystems eines Fahrzeuges miteinander zu vergleichen bzw. zu verwalten. Natürlich sind auch Änderungen bei der Entwicklung eines verteilten Steuergerätenetzwerks basierend auf einem Bussystem, z. B. CAN, hinsichtlich der Kommunikationsbeschreibung bzw. der Eigenschaften des Netzwerks, d. h. der Beschreibung der an den Bus angeschlossenen Steuergeräte sowie der Bus-Botschaften und der ausgetauschten Signale, also insbesondere Änderungen der so genannten DBC-Datenbanken, von großem Einfluss auf die Funktionsfähigkeit des Gesamtsystems bzw. des Steuerungs-/Regelungssystems und die Verwaltung der Software der einzelnen Steuergeräte. Hinsichtlich der Berücksichtigung dieser Wechselwirkungen in Bezug auf die Bewertung und Verfolgung des Reifegrades der im Steuergeräteverbund angewendeten Software sind gemäß dem Stand der Technik keine geeigneten Lösungen bekannt.

Gemäß der DE 10 2008 021 030 A1 ist ein Verfahren Stand der Technik, wobei ein Softwaremanager in einem Fahrzeug zur prozessorgestützten Verwaltung von Software für einzelne Steuergeräte des Fahrzeugs bereitgestellt wird. Dem Softwaremanager werden über eine physikalische Schnittstelle zum Laden oder Ändern der Software der Steuergeräte notwendige Daten übertragen. Der Softwaremanager verwaltet diese Daten und verteilt diese Daten entsprechend an die Steuergeräte.

Gemäß der Veröffentlichung MALTE LEGENHAUSEN ET AL: "RepoGuard: A Framework for Integration of Development Tools with Source Code Repositories", GLOBAL SOFTWARE ENGINEERING, 2009. ICGSE 2009. FOURTH IEEE INTERNATIONAL CONFERENCE ON, IEEE, PISCATAWAY, NJ, USA, 13. Juli 2009 (2009-07-13), Seiten 328 - 331, XP031505063, ISBN: 978-0-7695-3710-8, ist es weiterhin Stand der Technik, ein in der Softwareentwicklung verwendetes Versionskontrollsystem mit weiteren Versionskontrollsystemen, Werkzeugen zum Auffinden von Programmierfehlern oder auch selbst erstellten Steuerungsprogrammen zu kombinieren.

Gemäß der EP 1 860 548 A1 ist ein Verfahren zur Versionsverwaltung von Automatisierungsdaten eines Kraftwerk-Automatisierungssystems bekannt, die auf miteinander vernetzten Plattformen des Kraftwerk-Automatisierungssystems in unterschiedlichen Datenhaltungen abgelegt sind, bei dem Versionen wenigstens eines Datums der Automatisierungsdaten mittels eines geeigneten Werkzeugs in ein interoperables Format exportiert werden und die in Form eines interoperablen Formats vorliegenden Versionen mittels eines Versionsmanagementsystems verwaltet werden.

Es ist daher Aufgabe der vorliegenden Erfindung, ein Verfahren und eine Vorrichtung zum sicheren und effektiven Betrieb eines Steuerungs-/Regelungssystems eines Fahrzeuges in der Entwicklungsphase des Fahrzeuges zu schaffen, wobei möglichst alle Quellen für Qualitätsprobleme beseitigt sind.

Diese Aufgabe wird erfindungsgemäß mittels eines Verfahrens und einer Vorrichtung mit den Merkmalen gemäß den Patentansprüchen gelöst.

Erfindungsgemäß wird für einen Betrieb eines Steuerungs-/Regelungssystems eines Fahrzeuges mit mehreren mittels eines Bussystems verbundenen Steuergeräten zur Steuerung/Regelung von Fahrzeugkomponenten in der Entwicklungsphase derart verfahren, dass zunächst die Bildung eines ersten Systemsets erfolgt, wobei das Systemset eine erste definierte Anzahl von Steuergeräten mit jeweils der ersten Version bzw. einer Anfangs- oder Ausgangsversion der Software des jeweiligen Steuergerätes und der ersten Version bzw. einer Anfangs- oder Ausgangsversion der Kommunikationsbeschreibung des Bussystems umfasst.

Im weiteren Verlauf erfolgt die Durchführung eines ersten Entwicklungsschrittes in Verbindung mit dem ersten Systemset, wobei eine Anpassung (der ersten Version, der Anfangs- oder Ausgangsversion) der Software eines oder mehrerer Steuergeräte mit dem Ziel erfolgt, dass das jeweilige Steuergerät und die betreffende Fahrzeugkomponente möglichst optimal zusammenwirken und/oder eine Anpassung der Anzahl von Steuergeräten erfolgt und/oder eine Anpassung (der ersten Version, der Anfangs- oder Ausgangsversion) der Kommunikationsbeschreibung des Bussystems erfolgt.

Im noch weiteren Verlauf erfolgt erfindungsgemäß dann die Bildung eines weiteren Systemsets, wenn im ersten Entwicklungsschritt eine Änderung der ersten Anzahl von Steuergeräten erfolgt ist und/oder infolge der Anpassung (der ersten Version, der Anfangs- oder Ausgangsversion) der Software eine Änderung der Software eines oder mehrerer Steuergeräte erfolgt ist und/oder eine Änderung (der ersten Version, der Anfangs- oder Ausgangsversion) der Kommunikationsbeschreibung des Bussystems erfolgt ist.

Im noch weiteren Verlauf erfolgt dann erfindungsgemäß die Durchführung eines weiteren Entwicklungsschrittes mittels des weiteren Systemsets, wobei erneut eine Anpassung der Software eines oder mehrerer Steuergeräte mit dem Ziel erfolgt, dass das jeweilige Steuergerät und die betreffende Fahrzeugkomponente möglichst optimal zusammenwirken und/oder eine Anpassung der Anzahl von Steuergeräten erfolgt und/oder eine Anpassung der Kommunikationsbeschreibung des Bussystems erfolgt.

Erfindungsgemäß wird der Effekt erreicht, dass mittels des aktuellen Systemsets der jeweils letzte Entwicklungsschritt dokumentiert wird und mittels des aktuellen Systemsets eine Steuerung der nachfolgenden Entwicklungsschritte erfolgt, wobei dadurch eine Steuerung der nachfolgenden Entwicklungsschritte mittels des jeweils aktuellen Systemsets erfolgt, dass jede in den vorangegangenen Entwicklungsschritten vorgenommene Änderung durch den Einsatz des jeweiligen Systemsets bei den nachfolgenden Änderungen berücksichtigt wird.

Mittels des erfindungsgemäßen Verfahrens wird insbesondere ein aktuelles Systemset hervorgebracht und bevorzugt in einem Speicherelement eines Computers abgespeichert, so dass mittels des jeweils aktuellen Systemsets jeder Entwicklungsschritt dokumentiert wird und eine Grundlage für weitere auf dem aktuellen Systemset aufbauende Entwicklungsschritte bereitsteht.

Anders gesagt, stellen die erfindungsgemäß gebildeten Systemsets jeweils wichtige Zwischenschritte während der Entwicklung eines Steuerungs-/Regelungssystems eines Fahrzeuges dar. Insbesondere bei der Herstellung eines korrekt wirkenden Steuerungs-/Regelungssystems eines Fahrzeuges ist das dringend erforderlich. Mittels der gebildeten Systemsets werden die jeweiligen Zwischenschritte dokumentiert und es stehen Zwischenergebnisse bereit bzw. können einem weiteren Entwicklungsschritt zu Grunde gelegt werden. Das jeweils aktuelle Systemset umfasst bzw. beschreibt sämtliche während der Entwicklung bisher durchgeführten Änderungen, insbesondere durchgeführte Auslagerungen von Funktionen und/oder Funktionsparametern von einem auf ein anderes Steuergerät, so dass auf diese Weise eine sichere und effektive Entwicklung eines Steuerungs-/Regelungssystems eines Fahrzeuges möglich ist.

Erfindungsgemäß wird durch die Bildung von Systemsets eine eindeutige Zuordnung von zusammengehörigen/zusammenpassenden und sich während der Entwicklung eines Fahrzeugs ständig ändernden Elementen eines Steuerungs-/Regelungssystems des Fahrzeuges erreicht, wobei vor allem die jeweiligen Software-/Hardwarestände solche Elemente darstellen. D. h. die Dokumentation, Verfolgung, Bewertung und Bereitstellung von wichtigen Bestandteilen des Steuerungs-/Regelungssystems und somit eines sicheren Betriebes des Steuerungs-/Regelungssystems und damit eines Fahrzeuges in der Entwicklungsphase erfolgt erfindungsgemäß widerspruchsfrei, da durch die konsequente Bildung von Systemsets jede Änderung des gesamten Steuerungs-/Regelungssystems erfasst wird und zwar auch Verlagerungen von Bestandteilen der Software eines Steuergerätes zu einem weiteren Steuergerät des Verbundes.

Mit anderen Worten erfolgt erfindungsgemäß durch die Bildung und den Einsatz von Systemsets eine Steuerung/Regelung der Applikation/Kalibrierung/Anpassung/Entwicklung des Steuerungs-/Regelungssystems des Fahrzeuges bzw. eine Überwachung des ordnungsgemäßen Betriebs eines technischen Systems, nämlich des zu entwickelnden Steuerungs-/Regelungssystems eines Fahrzeuges in der Entwicklungsphase.

Mittels des erfindungsgemäßen Verfahrens ist eine systemübergreifende/globale Dokumentation und eine auf dieser Dokumentation aufbauende schrittweise Entwicklung eines Steuerungs-/Regelungssystems eines Fahrzeuges möglich. Hinsichtlich der Steuerung der Entwicklungsschritte besteht nunmehr keine Abhängigkeit mehr von der zu Grunde liegenden Elektrik-/Elektronik-Architektur des Steuerungs-/Regelungssystems bzw. des Fahrzeuges. D. h. jede relevante Änderung eines Elementes des Steuerungs-/Regelungssystems eines Fahrzeuges, auch eine Änderung der Elektrik-/Elektronik-Architektur wird erfindungsgemäß einfach und sicher mittels eines systemübergreifenden Kennwerts, nämlich dem erfindungsgemäßen Systemset registriert und bei der weiteren Entwicklung beachtet.

Mit noch anderen Worten erfolgt mittels des erfindungsgemäßen Verfahrens, d. h. durch die Einführung und Fortschreibung eines Systemsets, gegenüber dem Stand der Technik insbesondere eine Verlagerung der bei den einzelnen Entwicklungsschritten notwendigen Datendokumentation und Datenbereitstellung sowie Reifebewertung von der Hardwareebene auf die Systemebene, was erfindungswesentlich ist, so dass auch eine zwischenzeitlich erfolgte Auslagerung von Funktionen von einem Steuergerät auf ein weiteres Steuergerät im Verbund mit berücksichtigt wird.

Zusammengefasst erfolgt erfindungsgemäß während der Entwicklung eines Steuerungs-/Regelungssystems eines Fahrzeuges insbesondere kein ausschließliches Management der Software der einzelnen verwendeten Steuergeräte des Fahrzeuges mehr auf der Ebene des jeweiligen Steuergerätes. D. h. die Bewertung und Verbesserung des Reifegrades der Software bzw. der Funktionen und Funktionsparameter der Software eines Steuergerätes werden nicht mehr in Bezug auf dieses Steuergerät vorgenommen, sondern in Bezug auf das gesamte System zur Steuerung/Regelung des jeweiligen Fahrzeuges.

Von Vorteil ist es erfindungsgemäß weiterhin, dass alle an der Entwicklung eines Steuerungs-/Regelungssystems eines Fahrzeuges beteiligten Personen Zugriff auf das jeweils aktuelle Systemset haben und somit alle die stets aktuellen, zutreffenden für den Betrieb des Steuerungs-/Regelungssystems des Fahrzeuges notwendigen Daten bzw. Informationen weiteren Entwicklungen zu Grunde legen können. So ist eine weitere Bearbeitung mit der korrekten Systemkonfiguration sichergestellt und eine Quelle für Qualitätsprobleme beseitigt, so dass ein Zeitverlust bzw. Mehrkosten verhindert werden.

Auf Basis der während der Entwicklung des Steuerungs-/Regelungssystems eines Fahrzeuges durchgeführten Entwicklungsschritte und der somit bereitstehenden Vielzahl aufeinander aufbauender bzw. fortgeschriebener Systemsets erfolgt erfindungsgemäß die Durchführung eines Vergleichsschrittes. Dabei erfolgt ein Vergleich eines Systemsets mit einem weiteren Systemset oder mehreren weiteren Systemsets. In Abhängigkeit dieses Vergleichs wird erfindungsgemäß ein globaler, für das gesamte Steuerungs-/Regelungssystem eines Fahrzeuges gültiger Kennwert bestimmt. Der Kennwert entspricht insbesondere einem globalen, d. h. das gesamte Steuerungs-/Regelungssystem eines Fahrzeuges erfassenden bzw. beurteilenden Reifegrad. Ein derartiger Kennwert hat gegenüber dem Stand der Technik den Vorteil, dass insbesondere auch eine, den Reifegrad der Software der einzelnen Steuergeräte nicht unmittelbar beeinflussende Änderung am Steuerungs-/Regelungssystem eines Fahrzeuges mit in eine Bewertung des Entwicklungsstandes bzw. Reifegrades des Steuerungs-/Regelungssystems eines Fahrzeuges einfließt. Eine, den Reifegrad der Software der einzelnen Steuergeräte nicht unmittelbar beeinflussende Änderung am Steuerungs-/Regelungssystem eines Fahrzeuges ist insbesondere eine Auslagerung von Funktionen von einem Steuergerät auf ein weiteres Steuergerät, so dass dann beispielsweise die Software eines Steuergeräts mit einem relativ hohen Reifegrad und die Software eines Steuergeräts mit einem relativ niedrigen Reifegrad zwar jeweils keine Reifegradänderung erfahren, jedoch der erfindungsgemäße Kennwert bzw. globale Reifegrad das erfasst und so eine umfassende Beurteilung zulässt. Von Vorteil ist es außerdem, dass anhand der Systemsets einfach verfolgt werden kann, ob die Parameter einer bestimmten Funktion gleich geblieben sind oder sich verändert haben und zwar unabhängig von der Topologie des jeweiligen Steuerungs-/Regelungssystems.

Weitere vorteilhafte Ausgestaltungen der vorliegenden Erfindung sind dem nachfolgenden Ausführungsbeispiel sowie den abhängigen Patentansprüchen zu entnehmen.

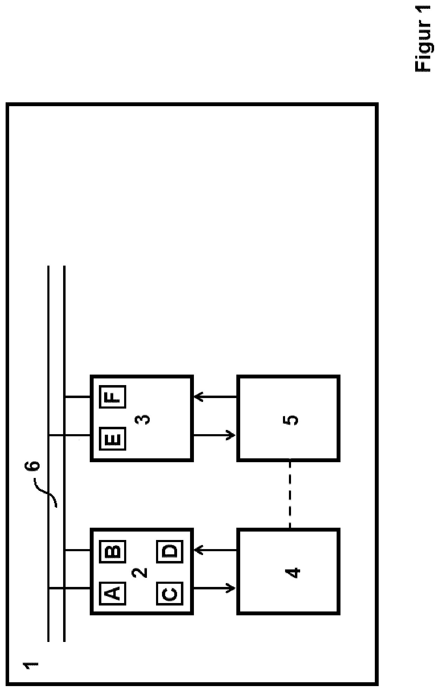

Wie in Figur 1 gezeigt, umfasst ein Steuerungs- und/oder Regelungssystem 1 eines Fahrzeuges, beispielsweise eines Land-, Luft- oder Wasserfahrzeuges, mehrere Steuergeräte 2, 3 zur Steuerung/Regelung einzelner Fahrzeugkomponenten 4, 5. Beispielsweise weist das Steuerungs-/Regelungssystem 1 ein erstes Steuergerät 2 für die Antriebsmaschine 4 und ein weiteres Steuergerät 3 für das Getriebe 5 des Fahrzeuges auf. Die Antriebsmaschine 4 und das Getriebe 5 wirken, wie allgemein bekannt, zum Antrieb des Fahrzeuges zusammen, wie durch die unterbrochene Linie in Figur 1 angedeutet. Jedes Steuergerät 2, 3 weist einerseits eine Hardware und andererseits eine Software bzw. ein Programm auf. Die Steuergeräte-Software lässt sich in Programmcode und Daten trennen. Der Programmcode des ersten Steuergerätes 2 umfasst die einzelnen auszuführenden Funktionen A-D und die Daten umfassen die Parameter dieser Funktionen A-D. Der Programmcode des weiteren Steuergerätes 3 umfasst die einzelnen auszuführenden Funktionen E, F und die Daten umfassen die Parameter dieser Funktionen E, F. Die Steuergeräte 2, 3 sind, wie beispielsweise gemäß der DE 101 62 853 C1 bekannt, mittels eines Bussystems 6 miteinander gekoppelt. Die Steuergeräte 2, 3 empfangen Eingangsgrößen (insbesondere Ist-Größen von Sensoren) der Fahrzeugkomponenten 4, 5 und senden Ausgangsgrößen (insbesondere Soll-Größen an Aktoren) an die Fahrzeugkomponenten 4, 5, wie in Figur 1 durch Pfeile angedeutet ist. Die Steuergeräte 2, 3 tauschen, wie allgemein bekannt, Informationen jedweder Art mittels des Bussystems 6 untereinander aus. So werden beispielsweise die Ein- und/oder Ausgangsgrößen der Funktionen A-D des ersten Steuergerätes 2 mittels des Bussystems 6 dem weiteren Steuergerät 3 übermittelt. Das im Zusammenhang mit Figur 1 beschriebene Zusammenwirken von Steuergeräten 2, 3 einschließlich der Hardware und Software, der Fahrzeugkomponenten 4, 5 und dem Bussystem 6 bzw. diese Struktur mit den entsprechenden Daten- und Energieflüssen entspricht eben einem Steuerungs-/Regelungssystem 1 eines Fahrzeuges.

Wie bekannt, erfolgt im Rahmen der Entwicklungsphase, d. h. zeitlich vor dem Beginn der Serienproduktion eines Fahrzeuges bzw. eines Steuerungs-/Regelungssystems 1 eines Fahrzeuges, in einer Abfolge von Entwicklungsschritten eine Erstellung oder Verfeinerung sowie eine Parametrierung der einzelnen Funktionen A-F bzw. eine Bedatung der Software der vorhandenen Steuergeräte 2, 3, so dass mittels jedes Steuergerätes 2, 3 bei dem Betrieb des Fahrzeuges in der späteren Nutzungsphase die jeweilige Fahrzeugkomponente 4, 5 möglichst optimal gesteuert/geregelt wird und alle vorhandenen Steuergeräte 2, 3 möglichst optimal zusammenwirken. Diese Abstimmung wird auch als Applikation oder Kalibrierung bezeichnet. D. h. während der Entwicklungsphase eines Fahrzeuges bzw. eines Steuerungs-/Regelungssystems 1 eines Fahrzeuges erfolgt ein schrittweiser Anpassungsprozess mit dem Ziel, dass das jeweilige Steuergerät 2, 3 und die betreffende Fahrzeugkomponente 4, 5 möglichst optimal zusammenwirken, beispielsweise durch Versuche, also Verstell- und Messvorgänge und/oder durch Simulationen (HIL).

Während der Entwicklungsphase eines Fahrzeuges bzw. eines Steuerungs-/Regelungssystems 1 eines Fahrzeuges, wie oben im Zusammenhang mit Figur 1 beschrieben, treten u. a. regelmäßig folgende Szenarien auf. Die hier im weiteren Verlauf beschriebenen Szenarios finden beispielhaft in einer zeitlichen Reihenfolge hintereinander statt.

In einem ersten Szenario erfolgt zuerst nur eine Änderung einer oder mehrerer der Funktionen A-D der Software des ersten Steuergerätes 2 der Antriebsmaschine 4 und/oder der dazugehörigen Funktionsparameter sowie eine Änderung einer oder mehrerer der Funktionen E, F der Software des zweiten Steuergerätes 3 des Getriebes 5 und/oder der dazugehörigen Funktionsparameter. Beispielsweise erfolgt die Durchführung eines Abgastests mit dem Fahrzeug bzw. mit dem Steuerungs-/Regelungssystem 1 des Fahrzeuges.

Grundlage ist dabei eine erste Version der Software des ersten Steuergerätes 2 und eine erste Version der Software des weiteren Steuergerätes 3. Diese beiden ersten Versionen werden beispielsweise mit Funktionen A-D beziehungsweise E, F und dazugehörigen Funktionsparametern vorbedatet, die mittels einer Simulation bestimmt wurden. Bei der jeweils ersten Version handelt es sich praktisch um eine Anfangs-, Ausgangs- oder Startversion, die auch von einem anderen Fahrzeug bzw. Steuerungs-/Regelungssystem 1 eines anderen Fahrzeuges übernommen werden kann, also auch schon einen gewissen Reifegrad aufweisen kann.

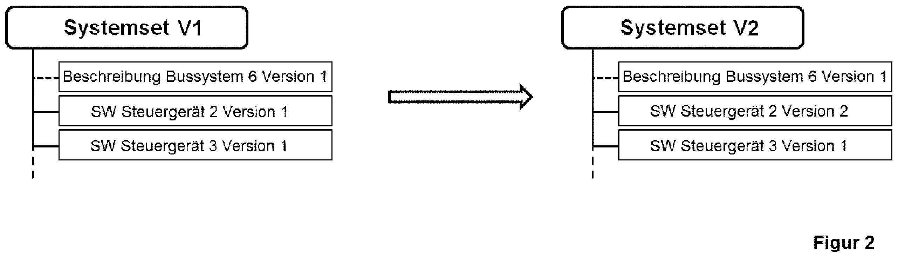

Die erste Version der Software des ersten Steuergerätes 2 und die erste Version der Software des weiteren Steuergerätes 3 sind erfindungsgemäß einem ersten Systemset V1 zugeordnet, wie in Figur 2 gezeigt. D. h. das erste Systemset V1 umfasst die erste Version der Software des ersten Steuergerätes 2 und die erste Version der Software des weiteren Steuergerätes 3. Das erste Systemset V1 umfasst weiterhin eine erste Version einer Kommunikationsbeschreibung des Bussystems 6, wobei mittels dieser Beschreibung die Eigenschaften des Bussystems 6 definiert werden. Insbesondere erfolgt mittels der Kommunikationsbeschreibung, die dem Bussystem 6 zugeordnet ist, eine Beschreibung der an das Bussystem 6 angeschlossenen Steuergeräte 2, 3 und deren Kommunikation untereinander sowie eine Definition der Bus-Botschaften und der ausgetauschten Signale zwischen den Steuergeräten 2, 3. D. h. die Kommunikationsbeschreibung wirkt mit dem Bussystem 6 zusammen. Die Kommunikationsbeschreibung ist praktisch die Kommunikations-Datenbasis des Bussystems 6. Insbesondere handelt es sich bei dem Bussystem 6 um einen CAN-Bus und bei der Beschreibung des Bussystems 6 um eine DBC-Datei bzw. eine DBC-Datenbank. Bei dem Bussystem kann es sich aber auch um FlexRay oder Ethernet handeln. Es kann auch ein Bussystem sein, das drahtlos wirkt.

Zusammengefasst ist durch das erste Systemset V1 das Zusammenwirken der Steuergeräte 2, 3 einschließlich der jeweiligen Hardware und die jeweilige Version der jeweiligen Software, der Fahrzeugkomponenten 4, 5 und des Bussystems 6 bzw. diese individuelle Struktur mit den entsprechenden Daten- und Energieflüssen bzw. das individuelle Steuerungs-/Regelungssystem 1 eines Fahrzeuges eindeutig definiert. D. h. durch das erste Systemset V1 wird eindeutig festgelegt, welche Bestandteile des Steuerungs-/Regelungssystems 1 des Fahrzeuges bzw. der Elektrik/Elektronik-Architektur einschließlich der Version der Software der verwendeten Steuergeräte 2, 3 während der Entwicklung des Steuerungs-/Regelungssystems 1 zusammengehören bzw. zusammenpassen und eine sichere Grundlage für eine weitere, schrittweise Entwicklung bzw. Applikation/Bedatung/Kalibrierung darstellen. Mittels des jeweiligen Systemsets Vx erfolgt erfindungsgemäß gegenüber dem Stand der Technik insbesondere eine Entkopplung der Verfügbarmachung der Daten von der Hardwareebene und eine Verlagerung der Verfügbarmachung der Daten auf die Systemebene.

Beispielsweise wird während oder nach dem oben genannten Abgastest mit dem Fahrzeug, d. h. in Verbindung mit dem Steuerungs-/Regelungssystem 1 mittels einer Prüfeinrichtung die Funktion A der Software des ersten Steuergerätes 2 in einem ersten Entwicklungsschritt derart geändert, dass mittels der Funktion A noch zutreffender das Betriebsverhalten der Antriebsmaschine 4 abgebildet wird und/oder es werden noch geeignetere Funktionsparameter der Funktion A identifiziert und in die Funktion A eingebunden. Es kann aber auch einfach nur ein Funktionsparameter der Funktion A der Software des ersten Steuergerätes 2 verändert werden. Jedenfalls verbessert sich der Reifegrad der ersten Version der Software des ersten Steuergerätes 2, da die Funktion A der Software des ersten Steuergerätes 2 verändert und/oder die Funktionsparameter der Funktion A angepasst wurden. Diese verbesserte erste Version der Software des ersten Steuergerätes 2 wird erfindungsgemäß wieder einem Systemset Vx zugeordnet, wobei durch diese Zuordnung der überarbeiteten ersten Version der Software des Steuergerätes 2 erfindungsgemäß ein zweites Systemset V2 gebildet wird, so dass das zweite Systemset V2 nunmehr eine zweite Version der Software des ersten Steuergerätes 2, weiterhin die erste Version der Software des weiteren Steuergerätes 3 des Getriebes 5 und auch weiterhin die erste Version der Kommunikationsbeschreibung des Bussystems 6 umfasst. Erfindungsgemäß wird das jeweils bestehende Systemset Vx mit jeder während der Entwicklung des Steuerungs-/Regelungssystems 1 des Fahrzeugs vorgenommenen Änderung eines Bestandteils des Systemsets Vx beziehungsweise des Steuerungs-/Regelungssystems 1 des Fahrzeuges fortgeschrieben, indem eine neue Version des Systemsets Vx erstellt wird, wobei die jeweils neue bzw. aktuelle Version des Systemsets Vx, nämlich das zweite Systemset V2 dann Grundlage für einen weiteren Entwicklungsschritt ist.

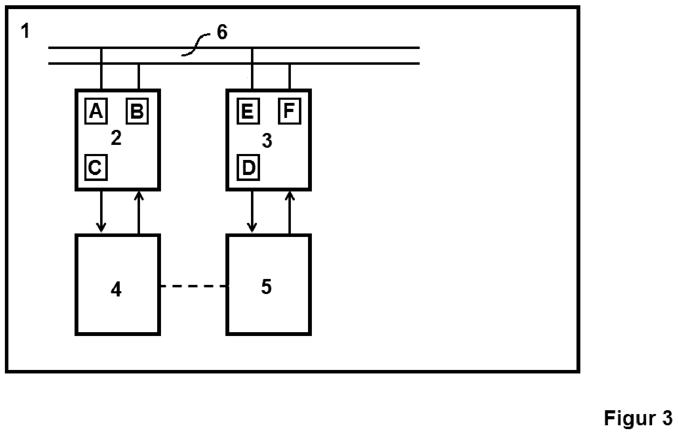

In einem weiteren Szenario erfolgt, wie gemäß der DE 101 62 853 C1 bekannt und wie in Figur 3 gezeigt, bei der Durchführung eines Entwicklungsschrittes ein Auslagern der Funktion D und der Parameter dieser Funktion ausgehend von dem ersten Steuergerät 2 auf das weitere Steuergerät 3. Diese Auslagerung erfolgt beispielsweise deshalb, weil die Software des ersten Steuergerätes 2 einen bestimmten Reifegrad erreicht hat, so dass die Hardware des ersten Steuergerätes 2 den Anforderungen nicht mehr gewachsen ist. Anknüpfend an das zuvor genannte Szenario hat die verbesserte erste Version der Software des ersten Steuergerätes 2 infolge der durchgeführten Änderung der Funktion A und/oder deren Parametrierung eben diesen kritischen Reifegrad erreicht. Jedenfalls ergibt sich durch diese Auslagerung eine neue Situation bzw. Qualität innerhalb des Steuerungs-/Regelungssystems 1 des Fahrzeuges, die unbedingt im weiteren Verlauf der Entwicklungsarbeiten, d. h. bei nachfolgenden Entwicklungsschritten beachtet werden muss. Da die beiden Steuergeräte 2, 3 ab dem Zeitpunkt der beschriebenen Auslagerung voneinander abhängig sind bzw. die jeweilige Software der Steuergeräte 2, 3 voneinander abhängig ist, wird erfindungsgemäß eine neue Version des bisher zu Grunde liegenden zweiten Systemsets V2, nämlich ein drittes Systemset V3 gebildet, welches das zweite Systemset V2 ersetzt. Das bisher bestehende zweite Systemset V2 wurde folglich fortgeschrieben, da eine Änderung eines Bestandteils des zweiten Systemsets V2 erfolgt ist, nämlich die Änderung der Software der beiden Steuergeräte 2, 3, da die Funktion D verlagert wurde, wobei die jeweils neue bzw. aktuelle Version des Systemsets Vx, nämlich das dritte Systemset V3 dann Grundlage für einen weiteren Entwicklungsschritt ist.

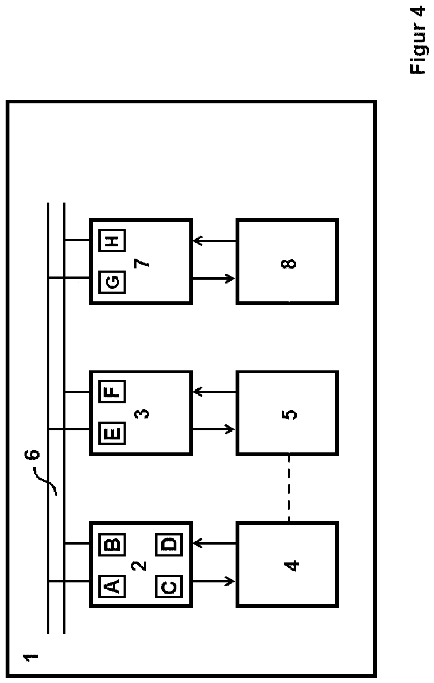

Gemäß einem noch weiteren Szenario wird im weiteren Verlauf der Entwicklungsarbeiten, d. h. bei der Durchführung eines weiteren Entwicklungsschrittes, dem Steuerungs-/Regelungssystem 1 des Fahrzeuges ein noch weiteres Steuergerät 7 hinzugefügt. Das noch weitere Steuergerät 7 dient der Dosierung eines Reduktionsmittels zur Abgasnachbehandlungsanlage 8 des Fahrzeuges, siehe Figur 4. Das Hinzufügen dieses noch weiteren Steuergerätes 7 ist beispielsweise deshalb nötig, weil sich gezeigt hat, dass mittels des ersten Systemsets V1 oder des zweiten Systemsets V2, also trotz der durchgeführten Änderung der Funktion A und/oder deren Parametrierung ein bestimmter Abgasgrenzwert nicht erreicht werden kann und für eine bessere Steuerung/Regelung einer Dosierung eines Reduktionsmittels zur Abgasnachbehandlungsanlage 8 eben das noch weitere Steuergerät 7 benötigt wird. Jedenfalls ergibt sich durch das Hinzufügen des noch weiteren Steuergerätes 7 wiederum eine neue Situation bzw. Qualität innerhalb des Steuerungs-/Regelungssystems 1 des Fahrzeuges, die im weiteren Verlauf der Entwicklungsarbeiten beachtet werden muss. Da die Steuerung/Regelung der Dosierung eines Reduktionsmittels zur Abgasanlage 8 mittels des noch weiteren Steuergerätes 7 unmittelbar von der Steuerung/Regelung der Antriebsmaschine 4 mittels des ersten Steuergerätes 2 abhängig ist, da diese ja das zu reinigende Abgas verursacht, wird erfindungsgemäß wiederum eine neue Version des bisher zu Grunde liegenden dritten Systemsets V3, nämlich ein viertes Systemset V4 gebildet, welches das dritte Systemset V3 ersetzt. Das bisher bestehende dritte Systemset V3 wurde folglich fortgeschrieben, da eine Änderung eines Bestandteils des dritten Systemsets V3 erfolgt ist, nämlich dass ein noch weiteres Steuergerät 7 zu dem Steuerungs-/Regelungssystem 1 des Fahrzeuges hinzugefügt wurde, das in einer Wechselwirkung mit zumindest einem bestehenden Bestandteil des Steuerungs-/Regelungssystems 1 des Fahrzeuges steht, nämlich mit dem ersten Steuergerät 2, wobei die jeweils neue bzw. aktuelle Version des Systemsets Vx, nämlich das vierte Systemset V4 dann Grundlage für einen weiteren Entwicklungsschritt ist.

In einem letzten Szenario erfolgt bei der Durchführung eines noch weiteren Entwicklungsschrittes weder eine Änderung oder Auslagerung einer Funktion, noch kommt ein weiteres Steuergerät zum Steuerungs-/Regelungssystem 1 des Fahrzeuges hinzu, vielmehr erfolgt eine Änderung betreffend die Kommunikationsbeschreibung des Bussystems 6. Angenommen das Bussystem 6 basiert auf CAN, dann stellt die Kommunikationsbeschreibung in Form von DBC-Dateien einen zentralen Aspekt dar. In DBC-Dateien bzw. DBC-Datenbanken werden die Eigenschaften des CAN-Netzwerks, die an den Bus angeschlossenen Steuergeräte 2, 3 und 7 sowie die CAN Botschaften und Signale beschrieben. Jedenfalls erfolgt eine Änderung betreffend die Kommunikationsbeschreibung des Bussystems 6, beispielsweise werden bestimmte Signale zusätzlich oder auf eine andere Weise als bisher verarbeitet und im Bussystem 6 verteilt. Das stellt wiederum eine neue Situation bzw. Qualität innerhalb des Steuerungs-/Regelungssystems 1 des Fahrzeuges dar, die im weiteren Verlauf der Entwicklungsarbeiten beachtet werden muss. Da die Änderung der Kommunikationsbeschreibung des Bussystems 6 unmittelbar das gesamte Steuerungs-/Regelungssystem 1 des Fahrzeuges betrifft, also weil eben sämtliche Steuergeräte 2, 3 und 7 mittels des Bussystems 6 miteinander verbunden sind, wird erfindungsgemäß wiederum eine neue Version des bisher zu Grunde liegenden vierten Systemsets V4, nämlich ein fünftes Systemset V5 gebildet, welches das vierte Systemset V4 ersetzt. Das bisher bestehende vierte Systemset V4 wurde folglich fortgeschrieben, da eine Änderung eines Bestandteils des vierten Systemsets V4 erfolgt ist, nämlich dass eine Änderung der Kommunikationsbeschreibung des Bussystems 6 bzw. der DBC-Datei erfolgt ist, was einen zentralen Einfluss auf die bestehenden Bestandteile des Steuerungs-/Regelungssystems 1 des Fahrzeuges hat, nämlich auf die drei Steuergeräte 2, 3 und 7, wobei die jeweils neue bzw. aktuelle Version des Systemsets Vx, nämlich das fünfte Systemset V5 dann Grundlage für einen noch weiteren Entwicklungsschritt ist.

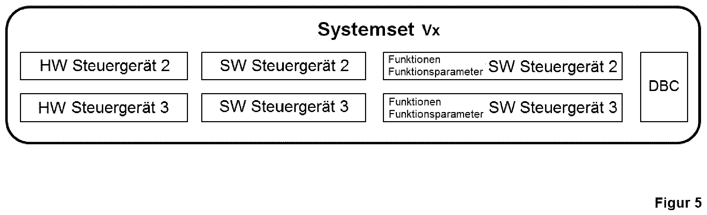

Zusammengefasst weist das erfindungsgemäße Systemset Vx, wie in Figur 5 gezeigt, Elemente eines Steuerungs-/Regelungssystems 1 eines Fahrzeuges auf, welche für einen Betrieb eines Fahrzeuges bzw. des Steuerungs-/Regelungssystems 1 in der Entwicklungsphase des Fahrzeuges vor einem Serienstart bzw. einer Serienproduktion wesentlich sind, nämlich Angaben/Informationen zu der Hardware (HW) des Steuerungs-/Regelungssystems 1, also welches Steuergerät 2, 3 Bestandteil des Steuerungs-/Regelungssystems 1 ist, Angaben/Informationen zu der Software (SW) des jeweiligen Steuergerätes 2, 3, welche Bestandteil des Steuerungs-/Regelungssystems 1 ist sowie die jeweilige Software (SW) selbst, insbesondere auch Angaben zur Version der Software (SW) des jeweiligen Steuergerätes 2, 3 die jeweils Bestandteil des Steuerungs-/Regelungssystems 1 ist, welche Funktionen und Funktionsparameter die jeweilige Software des wiederum jeweiligen Steuergerätes 2, 3 umfasst sowie welche Kommunikationsbeschreibung des Bussystems 6 (DBC) Bestandteil des Steuerungs-/Regelungssystems 1 ist, insbesondere welche Version der Kommunikationsbeschreibung des Bussystems 6 Bestandteil des Steuerungs-/Regelungssystems 1 dies ist sowie die Software, welche die Kommunikationsbeschreibung des Bussystems 6 darstellt. Das Systemset Vx entspricht folglich einem Satz beziehungsweise einer Zusammenstellung der oben genannten für einen Betrieb des Steuerungs-/Regelungssystems 1 in der Entwicklungsphase des Fahrzeuges wesentlichen Elemente des Steuerungs-/Regelungssystems 1, wobei sich die Elemente des Systemsets Vx mit der Durchführung von Entwicklungsschritten ändern und das Systemset Vx in Abhängigkeit der sich ergebenden schrittweisen Änderung seiner Elemente fortgeschrieben wird.

Praktisch entspricht das erfindungsgemäße Verfahren zum Betrieb eines Steuerungs-/Regelungssystems 1 eines Fahrzeuges einem Computerprogramm/Server, das alle Schritte dieses Verfahrens ausführt, wenn es auf einem Computer abläuft. D. h. mittels des erfindungsgemäßen Verfahrens wird insbesondere ein aktuelles Systemset Vx hervorgebracht und in einem Speicherelement des Computers abgespeichert, wobei eben ein Computer verwendet wird, so dass mittels des jeweils aktuellen Systemsets Vx jeder Entwicklungsschritt dokumentiert wird und eine Grundlage für weitere darauf aufbauende Entwicklungsschritte bereitsteht. Das Computerprogramm kann z. B. auf einem Server in Form einer Datenbank laufen, so dass mehrere Nutzer/Gewerke die Informationen zum Systemset Vx parallel und dezentral beisteuern und nutzen können.

Anders gesagt stellen die erfindungsgemäß gebildeten Systemsets Vx jeweils wichtige Zwischenschritte während der Entwicklung eines Steuerungs-/Regelungssystems 1 eines Fahrzeuges dar, insbesondere bei der Herstellung eines korrekt wirkenden Steuerungs-/Regelungssystems 1 eines Fahrzeuges, da durch diese so dokumentierten Zwischenschritte und so bereitstehenden Zwischenergebnisse, d. h. insbesondere jeweils mittels des aktuellen Systemsets Vx den Steuergeräten 2, 3, 7 jeweils die Software übermittelt wird bzw. einem weiteren Entwicklungsschritt zu Grunde gelegt wird, welche sämtliche während der Entwicklung bisher durchgeführten Änderungen umfasst, insbesondere durchgeführte Auslagerungen von Funktionen und/oder Funktionsparametern von einem auf ein anderes Steuergerät, so dass auf diese Weise eine sichere und effektive Entwicklung eines Steuerungs-/Regelungssystems 1 eines Fahrzeuges möglich ist.

Insbesondere entspricht die erfindungsgemäße Vorrichtung zum Betrieb eines Steuerungs-/Regelungssystems 1 eines Fahrzeuges einem Computer mit einer CPU und einem maschinenlesbaren Speichermedium, der zur Durchführung des erfindungsgemäßen Verfahrens hergerichtet ist, wobei auf dem Speichermedium ein Computerprogramm gespeichert ist, das alle Schritte des erfindungsgemäßen Verfahrens umfasst, wobei das Computerprogramm mittels der CPU ausgeführt wird.

Erfindungsgemäß wird auch ein Computerprogrammprodukt bereitgestellt, mit einem auf einem maschinenlesbaren Speichermedium gespeicherten Programmcode zur Durchführung des erfindungsgemäßen, oben beschriebenen Verfahrens, wenn das Programm auf einem Computer ausgeführt wird.

## Patentansprüche

1. Computerimplementiertes Verfahren zur Herstellung eines korrekt wirkenden Steuerungs-/Regelungssystems (1) eines Fahrzeuges, wobei
- das Steuerungs-/Regelungssystem (1) mehrere Steuergeräte (2, 3, 7) zur Steuerung/Regelung von Fahrzeugkomponenten (4, 5, 8) aufweist und die Steuergeräte (2, 3, 7) mittels eines Bussystems (6) miteinander verbunden sind,
- die Steuergeräte (2, 3, 7) eine Hardware (HW) und eine Software (SW) umfassen und dem Bussystem (6) eine Kommunikationsbeschreibung zugeordnet ist,
- in der Entwicklungsphase des Steuerungs-/Regelungssystems (1) ein Betrieb des Steuerungs-/Regelungssystems (1) beginnend mit einer ersten Anzahl von Steuergeräten (2, 3, 7) mit jeweils einer Ausgangsversion der Software (SW) des jeweiligen Steuergerätes (2, 3, 7) und einer Ausgangsversion der Kommunikationsbeschreibung des Bussystems (6) erfolgt und im weiteren Verlauf der Entwicklung des Steuerungs-/Regelungssystems (1) in einer Abfolge von einzelnen Entwicklungsschritten eine Anpassung der Software (SW) der Steuergeräte (2, 3, 7) mit dem Ziel erfolgt, dass das jeweilige Steuergerät (2, 3, 7) und die betreffende Fahrzeugkomponente (4, 5, 8) möglichst optimal zusammenwirken und/oder eine Anpassung der Anzahl von Steuergeräten (2, 3, 7) erfolgt und/oder eine Anpassung der Kommunikationsbeschreibung des Bussystems (6) erfolgt,
**mit den folgenden Schritten:**
- Bildung eines ersten Systemsets (V1), umfassend die erste Anzahl von Steuergeräten (2, 3, 7) mit jeweils der Ausgangsversion der Software (SW) des jeweiligen Steuergerätes (2, 3, 7) und der Ausgangsversion der Kommunikationsbeschreibung des Bussystems (6),
- Durchführung eines ersten Entwicklungsschrittes durch einen Betrieb des Steuerungs-/Regelungssystems (1) mit dem ersten Systemset (V1), wobei eine Anpassung der Software (SW) eines oder mehrerer Steuergeräte (2, 3, 7) mit dem Ziel erfolgt, dass das jeweilige Steuergerät (2, 3, 7) und die betreffende Fahrzeugkomponente (4, 5, 8) möglichst optimal zusammenwirken und/oder eine Anpassung der Anzahl von Steuergeräten (2, 3, 7) erfolgt und/oder eine Anpassung der Kommunikationsbeschreibung des Bussystems (6) erfolgt,
- Bildung eines weiteren Systemsets (Vx), wenn im ersten Entwicklungsschritt eine Änderung der ersten Anzahl von Steuergeräten (2, 3, 7) erfolgt und/oder infolge der Anpassung der Software (SW) eine Änderung der Software (SW) eines oder mehrerer Steuergeräte (2, 3, 7) erfolgt und/oder eine Änderung der Kommunikationsbeschreibung des Bussystems (6) erfolgt,
- Durchführung eines weiteren Entwicklungsschrittes durch einen Betrieb des Steuerungs-/Regelungssystems (1) mit dem weiteren Systemset (Vx), wobei erneut eine Anpassung der Software (SW) eines oder mehrerer Steuergeräte (2, 3, 7) mit dem Ziel erfolgt, dass das jeweilige Steuergerät (2, 3, 7) und die betreffende Fahrzeugkomponente (4, 5, 8) möglichst optimal zusammenwirken und/oder eine Anpassung der Anzahl von Steuergeräten (2, 3, 7) erfolgt und/oder eine Anpassung der Kommunikationsbeschreibung des Bussystems (6) erfolgt,
so dass mittels des aktuellen Systemsets (Vx) der jeweils letzte Entwicklungsschritt dokumentiert wird und mittels des aktuellen Systemsets (Vx) eine Steuerung der nachfolgenden Entwicklungsschritte erfolgt, wobei dadurch eine Steuerung der nachfolgenden Entwicklungsschritte mittels des jeweils aktuellen Systemsets (Vx) erfolgt, dass jede in den vorangegangenen Entwicklungsschritten vorgenommene Änderung durch den Einsatz des jeweiligen Systemsets (Vx) bei den nachfolgenden Änderungen berücksichtigt wird,
**dadurch gekennzeichnet, dass** die Durchführung eines Vergleichsschrittes erfolgt, bei dem ein Vergleich eines Systemsets (Vx) mit einem weiteren Systemset (Vx) oder mehreren weiteren Systemsets (Vx) erfolgt, wobei in Abhängigkeit dieses Vergleichs ein globaler, für das gesamte Steuerungs-/Regelungssystem (1) gültiger Kennwert bestimmt wird, wobei der Kennwert einem Reifegrad entspricht, so dass auch eine den Reifegrad der Software der einzelnen Steuergeräte (2, 3, 7) nicht unmittelbar beeinflussende Änderung am Steuerungs-/Regelungssystem (1) mit in eine Bewertung des Reifegrades des Steuerungs-/Regelungssystems des Fahrzeuges einfließt.

2. Computerimplementiertes Verfahren nach Anspruch 1, **dadurch gekennzeichnet, dass** die Software (SW) der Steuergeräte (2, 3, 7) jeweils Funktionen (A-H) und Funktionsparameter aufweist und die Anpassung der Software (SW) eines oder mehrerer der Steuergeräte (2, 3, 7) darin besteht, dass eine oder mehrere Funktionen (A-H) und/oder deren Funktionsparameter geändert werden.

3. Computerimplementiertes Verfahren nach Anspruch 1 oder 2, **dadurch gekennzeichnet, dass** die Software (SW) der Steuergeräte (2, 3, 7) jeweils Funktionen (A-H) und Funktionsparameter aufweist und die Anpassung der Software (SW) mehrerer Steuergeräte (2, 3, 7) darin besteht, dass eine Funktion (A-H) oder mehrere Funktionen (A-H) und/oder deren Funktionsparameter von einem Steuergerät (2, 3, 7) der Anzahl von Steuergeräten (2, 3, 7) auf ein weiteres Steuergerät (2, 3, 7) der Anzahl von Steuergeräten (2, 3, 7) ausgelagert wird.

4. Vorrichtung zur Herstellung eines korrekt wirkenden Steuerungs-/Regelungssystems (1) eines Fahrzeuges **dadurch gekennzeichnet, dass** ein zur Durchführung des Verfahrens nach einem der Ansprüche 1 bis 3 hergerichteter Computer mit einer CPU und einem maschinenlesbaren Speichermedium vorgesehen ist, wobei auf dem Speichermedium ein Computerprogramm gespeichert ist, das alle Schritte eines Verfahrens nach einem der Ansprüche 1-3 umfasst, wobei das Computerprogramm mittels der CPU ausgeführt wird.

5. Computerprogramm, das alle Schritte eines Verfahrens nach einem der Ansprüche 1-3 ausführt, wenn es auf einem Computer abläuft.

6. Computerprogrammprodukt mit einem auf einem maschinenlesbaren Speichermedium gespeicherten Programmcode zur Durchführung des Verfahrens nach einem der Ansprüche 1 bis 3, wenn das Programm auf einem Computer ausgeführt wird.

## Claims

1. Computer-implemented method for producing a correctly acting open-loop/closed-loop control system (1) for a vehicle, wherein
- the open-loop/closed-loop control system (1) has multiple controllers (2, 3, 7) for open-loop/closed-loop control of vehicle components (4, 5, 8), and the controllers (2, 3, 7) are connected to one another by means of a bus system (6),
- the controllers (2, 3, 7) comprise hardware (HW) and software (SW), and the bus system (6) has an associated communication description,
- the development phase of the open-loop/closed-loop control system (1) involves the open-loop/closed-loop control system (1) being operated beginning with a first number of controllers (2, 3, 7) having in each case an initial version of the software (SW) of the respective controller (2, 3, 7) and an initial version of the communication description of the bus system (6), and the remainder of the development of the open-loop/closed-loop control system (1) involves the software (SW) of the controllers (2, 3, 7) being adapted in a succession of individual development steps with the aim of the respective controller (2, 3, 7) and the relevant vehicle component (4, 5, 8) interacting in as optimum a fashion as possible and/or the number of controllers (2, 3, 7) being adapted and/or the communication description of the bus system (6) being adapted,
**having the following steps:**
- formation of a first system set (V1), comprising the first number of controllers (2, 3, 7) having in each case the initial version of the software (SW) of the respective controller (2, 3, 7) and the initial version of the communication description of the bus system (6),
- performance of a first development step by means of operation of the open-loop/closed-loop control system (1) with the first system set (V1), wherein the software (SW) of one or more controllers (2, 3, 7) is adapted with the aim of the respective controller (2, 3, 7) and the relevant vehicle component (4, 5, 8) interacting in as optimum a fashion as possible and/or the number of controllers (2, 3, 7) being adapted and/or the communication description of the bus system (6) being adapted,
- formation of a further system set (Vx) if in the first development step the first number of controllers (2, 3, 7) changes and/or the adaptation of the software (SW) means that the software (SW) of one or more controllers (2, 3, 7) changes and/or the communication description of the bus system (6) changes,
- performance of a further development step by means of operation of the open-loop/closed-loop control system (1) with the further system set (Vx), wherein again the software (SW) of one or more controllers (2, 3, 7) is adapted with the aim of the respective controller (2, 3, 7) and the relevant vehicle component (4, 5, 8) interacting in as optimum a fashion as possible and/or the number of controllers (2, 3, 7) being adapted and/or the communication description of the bus system (6) being adapted,
so that the current system set (Vx) is used to document the respective last development step and the current system set (Vx) is used to control the subsequent development steps, this resulting in the subsequent development steps being controlled by means of the respective current system set (Vx) that any change made in the preceding development steps is taken into consideration for the subsequent changes as a result of the use of the respective system set (Vx),
**characterized in that** a comparison step is performed in which a system set (Vx) is compared with a further system set (Vx) or multiple further system sets (Vx), wherein this comparison is taken as a basis for determining a global characteristic value valid for the entire open-loop/closed-loop control system (1), the characteristic value being consistent with a maturity, so that even a change to the open-loop/closed-loop control system (1) that does not directly influence the maturity of the software of the individual controllers (2, 3, 7) is also taken into consideration for rating the maturity of the open-loop/closed-loop control system of the vehicle.

2. Computer-implemented method according to Claim 1, **characterized in that** the software (SW) of the controllers (2, 3, 7) has respective functions (A-H) and function parameters, and the adaptation of the software (SW) of one or more of the controllers (2, 3, 7) involves one or more functions (A-H) and/or the function parameters thereof being changed.

3. Computer-implemented method according to Claim 1 or 2, **characterized in that** the software (SW) of the controllers (2, 3, 7) has respective functions (A-H) and function parameters, and the adaptation of the software (SW) of multiple controllers (2, 3, 7) involves a function (A-H) or multiple functions (A-H) and/or the function parameters thereof being relocated from one controller (2, 3, 7) of the number of controllers (2, 3, 7) to a further controller (2, 3, 7) of the number of controllers (2, 3, 7).

4. Apparatus for producing a correctly acting open-loop/closed-loop control system (1) of a vehicle, **characterized in that** a computer set up to perform the method according to one of Claims 1 to 3 and having a CPU and a machine-readable storage medium is provided, wherein the storage medium stores a computer program comprising all the steps of a method according to one of Claims 1-3, the computer program being executed by means of the CPU.

5. Computer program that executes all the steps of a method according to one of Claims 1-3 when it runs on a computer.

6. Computer program product having a program code stored on a machine-readable storage medium for performing the method according to one of Claims 1 to 3 when the program is executed on a computer.

## Revendications

1. Procédé mis en oeuvre par ordinateur pour la fabrication d'un système de commande/régulation (1) à action correcte d'un véhicule,
- le système de commande/régulation (1) possédant plusieurs contrôleurs (2, 3, 7) servant à la commande/régulation de composants de véhicule (4, 5, 8) et les contrôleurs (2, 3, 7) étant reliés entre eux au moyen d'un système de bus (6),
- les contrôleurs (2, 3, 7) comportant un matériel (HW) et un logiciel (SW) et un descriptif de communication étant associé au système de bus (6),
- dans la phase de développement du système de commande/régulation (1), un fonctionnement du système de commande/régulation (1) étant effectué en commençant par un premier nombre de contrôleurs (2, 3, 7) ayant respectivement une version initiale du logiciel (SW) du contrôleur (2, 3, 7) respectif et une version initiale du descriptif de communication du système de bus (6), et dans la poursuite du développement du système de commande/régulation (1), dans une séquence d'étapes de développement individuelles, étant effectuée une adaptation du logiciel (SW) des contrôleurs (2, 3, 7) avec pour objectif que le contrôleur (2, 3, 7) respectif et le composant de véhicule (4, 5, 8) concerné coopèrent si possible de manière optimale et/ou une adaptation du nombre de contrôleurs (2, 3, 7) étant effectuée et/ou une adaptation du descriptif de communication du système de bus (6) étant effectuée,
comprenant les étapes suivantes :
- formation d'un premier ensemble de systèmes (V1) comprenant le premier nombre de contrôleurs (2, 3, 7) ayant respectivement la version initiale du logiciel (SW) du contrôleur (2, 3, 7) respectif et la version initiale du descriptif de communication du système de bus (6),
- réalisation d'une première étape de développement par un fonctionnement du système de commande/régulation (1) avec le premier ensemble de systèmes (V1), une adaptation du logiciel (SW) d'un ou plusieurs contrôleurs (2, 3, 7) étant effectuée avec pour objectif que le contrôleur (2, 3, 7) respectif et le composant de véhicule (4, 5, 8) concerné coopèrent si possible de manière optimale et/ou une adaptation du nombre de contrôleurs (2, 3, 7) étant effectuée et/ou une adaptation du descriptif de communication du système de bus (6) étant effectuée,
- formation d'un ensemble de systèmes supplémentaire (Vx) lorsque, dans la première étape de développement, une modification du premier nombre de contrôleurs (2, 3, 7) est effectuée et/ou une modification du logiciel (SW) d'un ou plusieurs contrôleurs (2, 3, 7) est effectuée suite à l'adaptation du logiciel (SW) et/ou une modification du descriptif de communication du système de bus (6) est effectuée,
- réalisation d'une étape de développement supplémentaire par un fonctionnement du système de commande/régulation (1) avec l'ensemble de systèmes supplémentaire (Vx), une adaptation du logiciel (SW) d'un ou plusieurs contrôleurs (2, 3, 7) étant à nouveau effectuée avec pour objectif que le contrôleur (2, 3, 7) respectif et le composant de véhicule (4, 5, 8) concerné coopèrent si possible de manière optimale et/ou une adaptation du nombre de contrôleurs (2, 3, 7) étant effectuée et/ou une adaptation du descriptif de communication du système de bus (6) étant effectuée,
de sorte que la dernière étape de développement respective est documentée au moyen de l'ensemble de systèmes (Vx) actuel et qu'une commande des étapes de développement suivantes est effectuée au moyen de l'ensemble de systèmes (Vx) actuel, une commande des étapes de développement suivantes étant ainsi effectuée au moyen de l'ensemble de systèmes (Vx) actuel respectif de sorte que chaque modification réalisée dans les étapes de développement précédentes soit prise en compte par l'utilisation de l'ensemble de systèmes (Vx) respectif lors des modifications suivantes,
**caractérisé en ce que** l'exécution d'une étape comparative a lieu, lors de laquelle est effectuée une comparaison d'un ensemble de systèmes (Vx) avec un ensemble de systèmes (Vx) supplémentaire ou plusieurs ensembles de systèmes (Vx) supplémentaires, une valeur caractéristique globale, valide pour la totalité du système de commande/régulation (1) étant déterminée en fonction de cette comparaison, la valeur caractéristique correspondant à un niveau de maturité de sorte qu'une modification au niveau du système de commande/régulation (1) qui n'influence pas directement le niveau de maturité du logiciel des contrôleurs (2, 3, 7) individuels intervienne également dans une évaluation du niveau de maturité du système de commande/régulation.

2. Procédé mis en oeuvre par ordinateur selon la revendication 1, **caractérisé en ce que** le logiciel (SW) des contrôleurs (2, 3, 7) possède respectivement des fonctions (A-H) et des paramètres de fonction et l'adaptation du logiciel (SW) d'un ou plusieurs des contrôleurs (2, 3, 7) consiste à modifier une ou plusieurs fonctions (A-H) et/ou leurs paramètres de fonction.

3. Procédé mis en oeuvre par ordinateur selon la revendication 1 ou 2, **caractérisé en ce que** le logiciel (SW) des contrôleurs (2, 3, 7) possède respectivement des fonctions (A-H) et des paramètres de fonction et l'adaptation du logiciel (SW) de plusieurs contrôleurs (2, 3, 7) consiste à ce qu'une fonction (A-H) ou plusieurs fonctions (A-H) et/ou leurs paramètres de fonction sont délocalisés d'un contrôleur (2, 3, 7) de la pluralité de contrôleurs (2, 3, 7) sur un autre contrôleur (2, 3, 7) de la pluralité de contrôleurs (2, 3, 7).

4. Dispositif de fabrication d'un système de commande/régulation (1) à action correcte d'un véhicule, **caractérisé en ce qu'**un ordinateur, muni d'une UCT et d'un support de mémorisation lisible par machine, est préparé en vue de mettre en oeuvre le procédé selon l'une des revendications 1 à 3, un programme informatique étant enregistré sur le support de mémorisation, lequel comprend toutes les étapes d'un procédé selon l'une des revendications 1 à 3, le programme informatique étant exécuté au moyen de l'UCT.

5. Programme informatique qui exécute toutes les étapes d'un procédé selon l'une des revendications 1 à 3 lorsqu'il est exécuté sur un ordinateur.

6. Produit de programme informatique comprenant un code de programme enregistré sur un support de mémorisation lisible par machine en vue de mettre en oeuvre le procédé selon l'une des revendications 1 à 3 lorsque le programme est exécuté sur un ordinateur.
